# EUROPEAN PATENT APPLICATION

(11) **EP 2 641 886 A2**
(43) Date of publication of application: **25.09.2013**
(21) Application number: 13159404.6
(22) Date of filing: 15.03.2013
(51) Int. Cl.: C04B 28/16, C04B 11/00

(54) **Gypsum powders and method of producing a gypsum molded product**

(30) Priority: 21.03.2012 JP 2012063350
(71) Applicant: Tokuyama Corporation, Shunan-shi, Yamaguchi 745-0053 (JP)
(72) Inventor: Hiranaka, Shingo, Yamaguchi, 745-0053 (JP)
(74) Representative: Albrecht, Thomas

(57) **Abstract**

Gypsum powders containing hemihydrate gypsum powders and type II anhydrous gypsum powders having a specific surface area of 1 to 10 m²/g, wherein the content of the type II anhydrous gypsum powders is 5 to 40 mass% based on the total of all the gypsums. The gypsum powders of the present invention make it possible to prepare slurry having high flowability even with a small amount of water to be mixed therewith, and a molded product obtained from the slurry has high strength.

## Description

### TECHNICAL FIELD

The present invention relates to gypsum powders which provide slurry having high flowability for the production of a molded product and are capable of producing a molded product having high strength and to a method of producing a gypsum molded product from the gypsum powders.

The present invention also promotes the effective use of reclaimed gypsum recovered from gypsum board waste.

### BACKGROUND ART

Gypsum board waste totals about 1, 500, 000 tons a year in Japan. About 2/3 of the above gypsum board waste is disposed by landfill. The amount of the gypsum board waste is increasing each year, and therefore an effective method of recycling gypsum board waste is desired from the viewpoints of landfill shortage and environmental protection. The recycling of gypsum board waste into a gypsum molded product and a cement material is conceivable as the application of the recycled gypsum. In consideration of the amount of consumption, it is considered that the recycling of gypsum board waste into a gypsum molded product will greatly contribute to the reduction of the amount of landfill.

To produce a gypsum molded product, the steps of mixing hemihydrate gypsum with water to prepare slurry, casting the slurry into a predetermined mold form and curing it are generally carried out. As the amount of water to be mixed is smaller, the strength of the molded product becomes higher. When the amount of water to be mixed is too small, the flowability of the obtained slurry becomes unsatisfactory, thereby making it difficult to cast the slurry into the mold form. Therefore, a gypsum material must have properties that make it possible to obtain slurry having high flowability with a suitable amount of water and a high-strength molded product.

When hemihydrate gypsum obtained simply by baking dihydrate gypsum (recovered dihydrate gypsum) recovered from gypsum board waste is mixed with water to prepare slurry, it is extremely difficult to cast the slurry into the mold form due to insufficient flowability with the same amount of water as that for by-product gypsum or natural gypsum. To provide high flowability to the slurry of hemihydrate gypsum derived from the recovered dihydrate gypsum, a larger amount of water than usual must be added. As a result, a gypsum molded product manufactured from the recovered dihydrate gypsum is inferior in strength and cannot be put to practical use.

Since there is a trade-off relationship between the flowability of the slurry prepared for the production of a gypsum molded product and the strength of the molded product as described above, when a molded product is to be produced from hemihydrate gypsum, there is a certain limit to the strength of the obtained molded product.

### DISCLOSURE OF THE INVENTION

The present invention was made to defuse the above situation.

It is a first object of the present invention to provide a way to recycle recovered dihydrate gypsum obtained from gypsum board waste into a gypsum molded product. It is aimed herein to provide a gypsum material which provides a molded product having the same level of strength as that obtained when only by-product gypsum or natural gypsum is used through slurry having the same level of flowability as that obtained when only by-product gypsum or natural gypsum is used despite that recovered dihydrate gypsum is used and a method of producing this molded product.

It is a second object of the present invention to provide a way to provide a gypsum molded product having higher strength than that of the prior art. It is aimed herein to provide a gypsum material capable of forming a molded product having higher strength than that of the prior art through slurry having the same level of flowability as that obtained when known hemihydrate gypsum is used and a method of producing this molded product.

It is a third object of the present invention to provide a way to provide slurry having higher flowability than that of the prior art. It is aimed herein to provide a gypsum material which provides a molded product having the same level of strength as that of the prior art through slurry having higher flowability than that obtained when known hemihydrate gypsum is used and a method of producing this molded product.

The inventors of the present invention conducted intensive studies to achieve the above objects. As a result, they found that gypsum powders obtained by mixing a predetermined amount of type II anhydrous gypsum having a suitable specific surface area with hemihydrate gypsum can achieve the above objects. The present invention was accomplished based on this finding.

That is, according to a first aspect of the present invention, there are provided gypsum powders which contain hemihydrate gypsum powders and type II anhydrous gypsum powders having a specific surface area (BET specific surface area) of 1 to 10 m²/g, wherein the content of the type II anhydrous gypsum powders is 5 to 40 mass% based on the total of all the gypsum powders.

According to a second aspect of the present invention, there is provided a method of producing a gypsum molded product comprising the steps of :
mixing the above gypsum powders with water to prepare slurry; and
curing the slurry to a predetermined shape.
The first object of the present invention is attained by producing type II anhydrous gypsum powders specified in the present invention from recovered dihydrate gypsum. The second object of the present invention is attained by the preferred embodiment of the present invention.

### BEST MODE FOR CARRYING OUT THE INVENTION

### <gypsum powders>

### [hemihydrate gypsum]

The hemihydrate gypsum used in the present invention is not particularly limited, and hemihydrate gypsum equivalent to conventionally known hemihydrate gypsum for the production of a gypsum molded product may be used. Although α-form hemihydrate gypsum and β-form hemihydrate gypsum are existent, the type of the hemihydrate gypsum is not particularly limited in the present invention, and either one of them or a mixture of them may be used.

Examples of the hemihydrate gypsum used in the present invention are commercially available hemihydrate gypsums and hemihydrate gypsums obtained by baking natural dehydrate gypsum or by-product dihydrate gypsum. Examples of the above by-product dihydrate gypsum include flue gas desulfurization gypsum and phosphate gypsum.

The BET specific surface (to be simply referred to as "specific surface area" hereinafter) of the hemihydrate gypsum powders used in the present invention is not particularly limited but preferably 0.1 to 1 m²/g, more preferably 0.2 to 0.5 m²/g. The particle size of the hemihydrate gypsum powders is not particularly limited but preferably 5 to 50 µm, more preferably 10 to 30 µm in terms of volume average particle diameter.

The physical properties except for the above properties of the hemihydrate gypsum powders in the present invention are arbitrary.

### [type II anhydrous gypsum]

In the present invention, the above hemihydrate gypsum powders and the type II anhydrous gypsum powders are used in combination. Thereby it is possible to prepare slurry having high flowability with a smaller amount of water than that when only hemihydrate gypsum powders are used. This anhydrous gypsum must be type II anhydrous gypsum. Since type III anhydrous gypsum has the same level of hydration activity as that of hemihydrate gypsum, it does not provide the effect of improving the flowability of the slurry.

The specific surface area of the type II anhydrous gypsum powders in the present invention is 1 to 10 m²/g. When this value is smaller than 1.0 m²/g, hydration activity is too low, whereby the effect of improving the strength of a molded product is not obtained, or strength may degrade. When this value is larger than 10 m²/g, hydration activity is too high, thereby reducing the flowability of the slurry. The specific surface area of the type II anhydrous gypsum is preferably 2 to 8 m²/g.

As the type II anhydrous gypsum used in the present invention, not only natural type II anhydrous gypsum but also type II anhydrous gypsum obtained by baking dihydrate gypsum may be used. Examples of the above dihydrate gypsum include natural dihydrate gypsum; by-product dihydrate gypsums such as flue gas desulfurization gypsum and phosphate gypsum; and dihydrate gypsum recovered from gypsum board waste. Since dihydrate gypsum recovered from gypsum board waste greatly differs from natural dihydrate gypsum and by-product dihydrate gypsum in micro-structure, it is extremely difficult to reuse it as dihydrate gypsum. Therefore, the method of the present invention capable of recycling dihydrate gypsum recovered from gypsum board waste by converting it to type II anhydrous gypsum is of great industrial value.

when type II anhydrous gypsum obtained by baking dihydrate gypsum is used as the type II anhydrous gypsum in the present invention, the heaving temperature for baking dihydrate gypsum as a raw material is suitably 500 to 900 °C. When this temperature is lower than 500 °C, hemihydrate gypsum remains in the obtained anhydrous gypsum, or type III anhydrous gypsum may be contained in the obtained anhydrous gypsum disadvantageously. When this temperature exceeds 900°C, the decomposition of gypsum may start disadvantageously. A baking time of 0.5 to 8 hours suffices.

The baking method is not particularly limited if the above temperature is obtained. For example, baking can be carried out by using a suitable baking apparatus such as a rotary kiln or a fluid bed baking apparatus.

In general, as the particle size of a powder becomes smaller, the specific surface area of the powder becomes larger. Therefore, the specific surface area of the type II anhydrous gypsum can be easily controlled by adjusting its particle size.

For example, when natural type II anhydrous gypsum powders are used as the type II anhydrous gypsum powders in the present invention, type II anhydrous gypsum powders having the above preferred specific surface area can be obtained by setting the volume average particle diameter to 1 to 20 µm.

When type II anhydrous gypsum powders obtained by baking dihydrate gypsum are used as the type II anhydrous gypsum powders in the present invention, type II anhydrous gypsum powders having the above preferred specific surface area can be obtained without pulverizing the gypsum or by pulverizing the gypsum before or after baking as required.

When natural dihydrate gypsum or by-product dihydrate gypsum is used as the dihydrate gypsum which is a raw material, if it is baked directly, type II anhydrous gypsum having a small specific surface area is obtained. Therefore, in this case, the gypsum is preferably pulverized before or after baking. In this case, type II anhydrous gypsum powders having the above preferred specific surface area can be obtained by setting the volume average particle diameter of the gypsum powders after pulverization to 1 to 20 µm. When dihydrate gypsum recovered from gypsum board waste is used as the dihydrate gypsum which is a raw material, type II anhydrous gypsum powders having the above preferred specific surface area can be obtained by carrying out baking under the above preferred conditions. Also in this case, the gypsum may be optionally pulverized before or after baking.

Any known pulverizer may be used to pulverize the gypsum. Examples of the pulverizer include ball mill, pin mill and jet mill.

The specific surface area may be controlled by classifying gypsum powders and removing either one or both of fine and coarse powders in place of the above pulverization or together with pulverization.

As the baking temperature is higher and the baking time is longer, the specific surface area of the obtained type II anhydrous gypsum powders becomes smaller. Therefore, pulverization or classification is preferably carried out in consideration of the above dependence upon baking conditions of specific surface area.

The physical properties except for the above properties of the type II anhydrous gypsum powders in the present invention are arbitrary.

The above type II anhydrous gypsum powders are used in an amount of 5 to 40 mass% based on the total, of all the gypsum powders of the present invention. When the content of the type II anhydrous gypsum powders is lower than 5 mass%, the effect of improving the flowability of the slurry becomes unsatisfactory. When this value exceeds 40 mass%, the strength of the obtained molded product degrades. The content of the type II anhydrous gypsum powders is preferably 5 to 35 mass%, more preferably 5 to 25 mass%, particularly preferably 10 to 25 mass% based on the total of all the gypsum powders.

### [other components]

The gypsum powders of the present invention contain the above hemihydrate gypsum powders and the above type II anhydrous gypsum powders The gypsum powders of the present invention may consist of only hemihydrate gypsum powders and type II anhydrous gypsum powders or may contain other components besides these as required.

The other components which can be contained in the gypsum powders of the present invention include other gypsum powders except for hemihydrate gypsum powders and type II anhydrous gypsum powders, an inorganic filler and a polymer filler.

The gypsum powders of the present invention may contain other gypsum powders except for hemihydrate gypsum powders and type II anhydrous gypsum powders if they are small in quantity. The other gypsums include type III anhydrous gypsum and dihydrate gypsum. The content of the other gypsum powders in the gypsum powders of the present invention is preferably not more than 5 mass%, more preferably not more than 1 mass% based on the total of all the gypsum powders. Most preferably, the other gypsum powders are not contained.

Examples of the above inorganic filler include lime powders, slag and talc. The content of this inorganic filler is preferably not more than 20 parts by mass, more preferably not more than 10 parts by mass based on 100 parts by mass of the total of all the gypsums.

Examples of the above polymer filler include polypropylene fibers and vinyl chloride powders. The content of the polymer filler is preferably not more than 10 parts by mass, more preferably not more than 5 parts by mass based on 100 parts by mass of the total of all the gypsums.

### [method of producing gypsum powders]

The gypsum powders of the present invention can be prepared by uniformly mixing together the above hemihydrate gypsum powders, the above type II anhydrous gypsum powders and optional components. Known kneaders such as a container rotating kneader, a high-speed stirring kneader (Henschel mixer) and an airflow stirring kneader may be preferably used for mixing.

The gypsum powders produced as described above are preferably classified by using a sieve before use. Gypsum powders passing through a sieve having an opening of 500 µm are preferably used, and gypsum powders passing through a sieve having an opening of 100 µm are more preferably used as the gypsum powders of the present invention.

### <method of producing a gypsum molded product>

The above gypsum powders of the present invention are mixed with water to prepare slurry which is then cured to a predetermine shape so as to obtain a gypsum molded product.

As water used when the slurry is prepared, water which is generally used for the production of a gypsum molded product may be used. Examples of the water include tap water and industrial water. The mixing ratio of gypsum powders to water used to prepare the slurry is not particularly limited but the amount of water is preferably 30 to 100 parts by mass based on 100 parts by mass of the gypsum powders so as to achieve the high flowability of the slurry and the high strength of the obtained molded product at the same time.

A gypsum molded product can be produced by using the above slurry in accordance with a known method. For example, the gypsum powders of the present invention are mixed with water to prepare slurry, and then the slurry is cast into a mold form having a cavity to be mated with a predetermined shape and left to stand so that it can be cured to the predetermined shape. As for standing conditions, for example, the slurry is left to stand at room temperature (25°C) to 40°C for 2 to 24 hours.

An example of the gypsum molded product produced by the present invention is a gypsum board.

The gypsum powders of the present invention provide slurry having high flowability, and a high-strength molded product can be produced from the slurry as described above. Therefore, according to a first aspect of the present invention, a molded product having the same level of strength as that obtained when only by-product gypsum or natural gypsum is used can be obtained through slurry having the same level of flowability as that obtained when only by-product gypsum or natural gypsum is used despite that recovered dihydrate gypsum obtained from gypsum board waste is used.

According to a second aspect of the present invention, a molded product having higher strength than that of the prior art can be obtained through slurry having the same level of flowability as that obtained when known hemihydrate gypsum is used.

According to a third aspect of the present invention, a molded product having the same level of strength as that of the prior art can be obtained through slurry having higher flowability than that obtained when known hemihydrate gypsum is used.

### Examples

The following examples are provided for the purpose of further illustrating the present invention but are in no way to be taken as limiting.

Evaluations in the following examples were carried out by the following methods.

### [specific surface area]

The specific surface area of type II anhydrous gypsum was obtained from the amount of adsorbed nitrogen at a liquid nitrogen temperature in accordance with a BET method.

### [flowability of slurry]

After the slurry obtained in each Example or each Comparative Example was stirred for 1 minute, it was filled into a vinyl chloride pipe having an inner diameter of 50 mm and a height of 51 cm (inner capacity of 100 mL) placed on a sheet glass, and then the pipe was pulled up right after that. The slurry contained in the pipe spread over the sheet glass by this operation. After the slurry got still, the lengths in two crossing directions of the spread slurry were measured, and the average value of these measurement data was taken as a flow value which is an index of flowability.

As this flow value is larger, it can be evaluated that the slurry has higher flowabiity. To produce a gypsum molded product, a flowability of 200 to 300 mm is suitable.

### [flexural strength of molded product]

The flexural strength of a molded product was measured in accordance with JIS A9604.

A test sample was manufactured as follows.

The slurry obtained in each Example or each Comparative Example was cast into a mold form having cavity measuring 40 mm x 40 mm x 60 mm and left to stand at room temperature for 24 hours. Then, the molded product was taken out from the mold form and dried in a drier whose inside temperature was set to 40°C. When the weight change of the test sample became not more than 0.2 g per 6 hours, the test sample was subjected to a flexural strength test.

The flexural strength test was conducted as follows.

The above test sample was placed on two support rollers having a diameter of 10 mm which were arranged at an interval of 100 mm. Then, load was applied to the center of the test sample by a loading roller having a diameter of 10 mm to obtain maximum load until the test sample was broken as flexural strength.

### [content of residual type II anhydrous gypsum in molded product]

The content (wt%) of the residual type II anhydrous gypsum in the molded product was obtained from the result of powder X-ray diffraction measured by using a chip obtained from a broken piece of the test sample after the above flexural strength test.

### [volume average particle diameter]

The volume average particle diameter of each type of gypsum powders was measured by using a laser diffraction particle size distribution meter.

In the following examples, the Calcium Sulfate Calcined of Wako Pure Chemical Industries, Ltd. was used as the hemihydrate gypsum powders which are a raw material; dihydrate gypsum produced at a power plant of Tokuyama Corporation was used as flue gas desulfurization gypsum; and powders obtained by pulverizing gypsum board waste and letting the pulverized product passing through a sieve having an opening of 3 mm to remove board paper were used as waste gypsum powders.

For the preparation of slurry in the following experiments, the amount of water to be mixed was adjusted such that the flow value of the slurry became 280 to 290 mm. The amount of water (mL) to be mixed is based on 100 g of the total of gypsum powders in use.

### Reference Examples

Water was added to hemihydrate gypsum powders to prepare slurry, and various tests were made on the slurry.

### Examples 1 to 3

Flue gas desulfurization gypsum powders were baked at 500°C for 6 hours to obtain type II anhydrous gypsum which was then pulverized in a ball mill to obtain powders having a specific surface area of 2.1 m²/g and a volume average particle diameter of 14 µm. The type II anhydrous gypsum powders were mixed with hemihydrate gypsum powders in a ratio shown in Table 1 to obtain mixed powders, water was added to the mixed powders to prepare slurry, and various tests were made on the slurry.

### Example 4 to 6

Waste gypsum powders were baked at 500°C for 6 hours to obtain type II anhydrous gypsum powders. The type II anhydrous gypsum powders had a specific surface area of 6.8 m²/g and a volume average particle diameter of 6 µm. The type II anhydrous gypsum powders were mixed with hemihydrate gypsum powders in a ratio shown in Table 1 to obtain mixed powders, water was added to the mixed powders to prepare slurry, and various tests were made on the slurry.

### Examples 7 to 9

Waste gypsum powders were baked at 700°C for 6 hours to obtain type II anhydrous gypsum powders. The type II anhydrous gypsum powders had a specific surface area of 4.1 m²/g and a volume average particle diameter of 11 µm. The types II anhydrous gypsum powders were mixed with hemihydrate gypsum powders in a ratio shown in Table 1 to obtain mixed powders, water was added to the mixed powders to prepare slurry, and various tests were made on the slurry.

### Examples 10 to 12

Waste gypsum powders were baked at 900°C for 6 hours to obtain type II anhydrous gypsum powders. The type II anhydrous gypsum powders had a specific surface area of 1.2 m²/g and a volume average particle diameter of 19 µm. The type II anhydrous gypsum powders were mixed with hemihydrate gypsum powders in a ratio shown in Table 1 to obtain mixed powders, water was added to the mixed powders to prepare slurry, and various tests were made on the slurry.

### Comparative Example 1

Flue gas desulfurization gypsum powders were baked at 900°C for 6 hours to obtain type II anhydrous gypsum powders. The type II anhydrous gypsum powders had a specific surface area of 0.55 m²/g and a volume average particle diameter of 32 µm. The type II anhydrous gypsum powders were mixed with hemihydrate gypsum powders in a ratio shown in Table 1 to obtain mixed powders, water was added to the mixed powders to prepare slurry, and various tests were made on the slurry.

### Comparative Examples 2 and 3

Waste gypsum powders were baked at 130°C for 6 hours to obtain hemihydrate gypsum powders. The hemihydrate gypsum powders were mixed with hemihydrate gypsum powders (Calcium Sulfate Calcined of Wako Pure Chemical Industries, Ltd.) as a raw material in a ratio shown in Table 1 to obtain mixed powders, water was added to the mixed powders to prepare slurry, and various tests were made on the slurry.

### Comparative Example 4

The type II anhydrous gypsum powders obtained in the above Examples 4 to 6 were mixed with hemihydrate gypsum powders in a ratio shown in Table 1 to obtain mixed powders, water was added to the mixed powders to prepare slurry, and various tests were made on the slurry.

### Comparative Example 5

The type II anhydrous gypsum powders obtained in the above Examples 10 to 12 were mixed with hemihydrate gypsum powders in a ratio shown in Table 1 to obtain mixed powders, water was added to the mixed powders to prepare slurry, and various tests were made on the slurry.

### Comparative Examples 6 and 7

After waste gypsum powders were pulverized by a jet mill, the obtained pulverized product was baked at 500°C for 6 hours to obtain type II anhydrous gypsum. The type II anhydrous gypsum powders had a specific surface area of 11 m²/g and a volume average particle diameter of 2 µm. The type II anhydrous gypsum powders were mixed with hemihydrate gypsum powders in a ratio shown in Table 1 to obtain mixed powders, water was added to the mixed powders to prepare slurry, and various tests were made on the slurry.

**Table 1: composition of slurry and evaluation results**

| | Amount of type II anhydrous gypsum (wt%) | Specific surface area of type II anhydrous gypsum (m²/g) | Amount of water (mL) | Flow (mm) | Flexural strength (N/mm²) | Content of residual type II anhydrous gypsum (wt%) |
|---|---|---|---|---|---|---|
| Reference Example | 0 | - | 100 | 280 | 3.2 | - |
| Example 1 | 5 | 2.1 | | 290 | 3.6 | 0.1 |
| Example 2 | 20 | 2.1 | 90 | 285 | 4.1 | 0.5 |
| Example 3 | 30 | 2.1 | 90 | 285 | 3.3 | 1.0 |
| Example 4 | 5 | 6.8 | 94 | 290 | 3.6 | 0.1 |
| Example 5 | 20 | 6.8 | 95 | 290 | 3.7 | 0.2 |
| Example 6 | 30 | 6.8 | 95 | 280 | 3.5 | 0.4 |
| Example 7 | 5 | 4.1 | 91 | 290 | 3.5 | 0.3 |
| Example 8 | 20 | 4.1 | 94 | 280 | 4.1 | 0.8 |
| Example 9 | 30 | 4.1 | 96 | 280 | 3.9 | 1.3 |
| Example 10 | 5 | 1.2 | 83 | 280 | 4.0 | 3.5 |
| Example 11 | 20 | 1.2 | 80 | 285 | 3.4 | 14.8 |
| Example 12 | 40 | 1.2 | 73 | 290 | 3.2 | 30.7 |
| Comparative Example 1 | 30 | 0.55 | 90 | 290 | 2.6 | 17.1 |
| Comparative Example 2 | 20* | - | 120 | 280 | 2.2 | - |
| Comparative Example 3 | 30* | - | 130 | 280 | 1.5 | - |
| Comparative Example 4 | 50 | 6.8 | 105 | 280 | 2.9 | 1.8 |
| Comparative Example 5 | 60 | 1.2 | 65 | 290 | 2.0 | 49.3 |
| Comparative Example 6 | 30 | 11 | 110 | 280 | 3.0 | 0.0 |
| Comparative Example 7 | 40 | 11 | 120 | 280 | 2.7 | 0.1 |

| | | | | | | |
|---|---|---|---|---|---|---|
| hemihydrate gypsum was used in place of type II anhydrous gypsum in Comparative Examples 2 and 3. | | | | | | |

### Effect of the Invention

The gypsum powders of the present invention make it possible to prepare slurry having high flowability even with a small amount of water to be mixed therewith, and a molded product obtained from the slurry has high strength.

When type II anhydrous gypsum powders produced from recovered dihydrate gypsum are used to produce the gypsum powders of the present invention, there is provided a way to recycle gypsum board waste into a gypsum molded product. According to a preferred mode of the present invention, a molded product having higher strength than that of the prior art can be obtained from slurry having high flowability.

## Claims

1. Gypsum powders containing hemihydrate gypsum powders and type II anhydrous gypsum powders having a specific surface area of 1 to 10 m²/g, wherein the content of the type II anhydrous gypsum powders is 5 to 40 mass% based on the total of all the gypsums.

2. The gypsum powders according to claim 1, wherein the specific surface area of the type II anhydrous gypsum powders is 2 to 8 m²/g.

3. The gypsum powders according to claim 1 or 2, wherein the content of the type II anhydrous gypsum powders is 5 to 25 mass% based on the total of all the gypsums.

4. The gypsum powders according to any one of claims 1 to 3, wherein the type II anhydrous gypsum powders are produced through the step of baking dihydrate gypsum recovered from gypsum board waste.

5. A method of producing a gypsum molded product, comprising the steps of:
mixing the gypsum powders of any one of claims 1 to 4 with water to prepare slurry; and
curing the slurry to a predetermined shape.

6. A method of producing the gypsum powders of claim 4, comprising the steps of:
baking dihydrate gypsum recovered from gypsum board waste to obtain type II anhydrous gypsum powders having a specific surface area of 1 to 10 m²/g; and
mixing the type II anhydrous gypsum powders with hemihydrate gypsum powders.

7. A method of producing a gypsum molded product, comprising the steps of:
obtaining gypsum powders by the method of claim 6;
mixing the gypsum powders with water to prepare slurry; and
curing the slurry to a predetermined shape.
